(19) **Europäisches Patentamt**
**European Patent Office**
**Office européen des brevets**

(11) **EP 4 595 758 A1**

(12) # EUROPEAN PATENT APPLICATION

(43) Date of publication:
**06.08.2025 Bulletin 2025/32**

(21) Application number: **24382109.7**

(22) Date of filing: **05.02.2024**

(51) International Patent Classification (IPC):
**A22C 11/00** (2006.01) **B65B 35/44** (2006.01)

(52) Cooperative Patent Classification (CPC):
**A22C 11/008; B65B 35/243; B65B 35/246;
B65B 35/44**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Metalquimia, S.A.U.**
**17007 Girona (ES)**

(72) Inventor: **LAGARES GAMERO, Josep**
**17850 Besalú (ES)**

(74) Representative: **Torner, Juncosa I Associats, SL**
**C / Pau Claris, 108, 1r 1a**
**08009 Barcelona (ES)**

(54) **AUTOMATIC MACHINE FOR TRANSFERRING SAUSAGES TO A CONVEYOR BELT AND SYSTEM FOR FORMING AND TRANSFERRING BATCHES OF SAUSAGES**

(57) It is disclosed an automatic machine for transferring sausages to a conveyor belt, the machine comprising a frame supporting: a first conveyor belt for advancing a plurality of sausages in parallel arrangement, adjacent to each other; a sausage feeding conveyor belt for feeding sausages to a sausage discharge unit; said sausage discharge unit being supported by a carriage movable along the first conveyor belt and configured to synchronize with the advance speed of the first conveyor belt; the sausage discharge unit comprising a rotating disc at least partially surrounded by a guiding element defining a guiding channel for driving the sausages to the first conveyor belt; said rotating disc being driven by a driving unit comprising a motor; wherein said motor is arranged at a fixed position relative to the frame of the automatic machine.

It is also disclosed a system for forming and transferring batches of sausages.

Fig.2

**Description**

Technical field

The present invention is directed to an automatic machine for transferring sausages to a conveyor belt.

The present invention also discloses a system for transferring batches of sausages comprising the aforementioned automatic machine for transferring sausages to a conveyor belt.

Background of the Invention

In the meat industry and, in particular, in the sausage manufacturing industry, is necessary to transfer sausages from one place to another, typically from one conveyor belt to another.

It is known in the art an automatic machine for transferring sausages to a conveyor belt according to the preamble of claim 1. In such machine known in the art the electric motor that drives the rotating disc of the sausage discharge unit is attached to said sausage discharge unit so that they move together. Having a sausage discharge unit with its motor attached thereto, increases the mass of the sausage discharge unit and shifts its centre of gravity, with the consequences that this entails for the dynamics of the sausage discharge unit.

The present invention aims to provide an automatic machine for transferring sausages to a conveyor belt that solves the drawbacks of known machines.

In the meat industry and, in particular, sausage manufacturing industry, it is also necessary to create batches of sausages, and preferably, package said batches of sausages.

The present invention aims to provide an automatic machine for forming and transferring batches of sausages.

US 9554581 B2 discloses a sausage collation device for collating sausages to form sausage groups having a predetermined number of sausages, comprising a transport device for transporting said sausages spaced apart from each other; at least two accumulator elements for collating said sausages, where said at least two accumulator elements for collating are movable in a direction of transport T of said transport device, and a control device including instructions for inserting a first accumulator element downstream a last sausage of said first sausage group, and pushing said first sausage group together between said first accumulator element and said second accumulator element.

US 2011/0124276 A1 discloses a device for loading link sausages into a tray package comprising a first continuous conveyor adapted and constructed to transport sausage links, a transfer belt adapted and constructed to transfer sausages from the first continuous conveyor, a separation and placement device adapted and constructed to receive sausages from transfer belt, separate the sausages from transfer belt, separate the sausages from transfer belt into discrete groups of plurality of sausages, and place the discrete groups onto a tray package, and a second contiguous conveyor adapted and constructed to transport loaded trays of sausage links away from the separation and placement device.

It is also known in the art automatic machines that employ robotic arms to from groups of sausages and to transfer them to subsequent stations of their manufacturing process. However, such kind of robots are expensive and impose additional tasks to train and maintain.

Description of the Invention

The present invention aims to provide an automatic machine for transferring sausages to a conveyor belt that is reliable, easy to maintain and that operates smoother and with reduced vibrations when compared to machines known in the art.

In particular, according to a first aspect, the present invention concerns to an automatic machine for transferring sausages to a conveyor belt, as defined in claim 1, that comprises a frame supporting a first conveyor belt for advancing a plurality of sausages in parallel arrangement, adjacent to each other, at a first advance speed; a sausage feeding conveyor belt for feeding sausages to a sausage discharge unit; the sausage discharge unit being configured to transfer sausages from the sausage feeding conveyor belt to the first conveyor belt; said sausage discharge unit being supported by a carriage movable along the first conveyor belt and configured to synchronize with the advance speed of the first conveyor belt so that the sausages are placed on the first conveyor belt in a substantially contiguous manner in parallel arrangement, adjacent to each other; the sausage discharge unit comprising a rotating disc at least partially surrounded by a guiding element, the rotating disc together with the guiding element defining a guiding channel of a predetermined width for driving the sausages from the sausage feeding conveyor belt to the first conveyor belt; said rotating disc being driven by a driving unit comprising an electric motor; wherein said electric motor is arranged at a fixed position of the automatic machine for transferring sausages to a conveyor belt, that is to say, said electric motor does not move together with any component of the automatic machine and, in particular, does not move together with the sausage discharge unit.

The aforementioned frame of the automatic machine for transferring sausages to a conveyor belt may support more elements than the ones described hereinabove.

When compared with the sausage discharge unit of an automatic machine known in the art, the one of the present invention operates smoother as the mass of the sausage discharge unit is greatly reduced by not having the electric motor that drives the rotating disc attached to it. In addition to a reduced mass, the claimed sausage discharge unit also has a lower centre of gravity, which also improves the dynamics of the sausage discharge unit. The reduced mass and the improved centre of gravity of the sausage discharge unit of the claimed automatic machine for transferring sausages to a conveyor belt lead to a lower inertia of the sausage discharge unit, so that it operates smoothly and with less vibrations, which results in an increased lifespan as the mechanical stress of its components is reduced, when compared to sausage discharge units known in the art.

When compared to other machines known in the art, sausage discharge units comprising a rotating disc provide greater performance than discharge units of other kind.

According to the first aspect of the present invention, the electric motor may be operatively connected to the rotating disc by a first belt.

According to the first aspect of the present invention, the first belt may be arranged substantially parallel to the first conveyor belt.

According to the first aspect of the present invention, the first belt may drive a first shaft that drives a second belt configured to drive the rotating disc.

According to the first aspect of the present invention, the electric motor may rotate at a certain rotational speed and the automatic machine may further comprise a control unit configured to adjust the rotational speed of the electric motor so the rotating disc rotates at a substantially constant rotational speed.

According to the first aspect of the present invention, the second belt may be configured to act as the guiding element, that is to say, the second belt may drive the rotating disc as well as, together with said rotating disc, define the guiding channel of a predetermined with that drives the sausages from the sausage feeding conveyor belt to the first conveyor belt.

According to the first aspect of the present invention, the sausage discharge unit may comprise a curved wall configured to act as the guiding element, that is to say, the guiding channel of a predetermined with for driving sausages from the sausage feeding conveyor belt to the first conveyor belt may be defined by the rotating disc and said curved wall.

According to the first aspect of the present invention, the first conveyor belt may comprise a plurality of contiguous individual compartments, each individual compartment being configured to receive a corresponding sausage; and the carriage may be configured to move the sausage discharge unit along the first conveyor belt so that consecutive sausages are placed in contiguous individual compartments.

According to the first aspect of the present invention, the sausage discharge unit may comprise a removable protective cover of the rotating disc. Said removable protection cover prevents risk of entrapment with the rotating disc and allows easy access to said rotating disc for maintenance or replacing it.

According to the first aspect of the present invention, the sausage discharge unit may comprise a sausage guide for guiding sausages to the first conveyor belt.

According to the first aspect of the present invention, the automatic machine for transferring sausages to a conveyor belt may further comprise an aligning unit for aligning the plurality of sausages in parallel arrangement, on the first conveyor belt, the aligning unit comprising an oscillating inclined plane arranged in a convergent manner.

According to the first aspect of the present invention, the sausage feeding conveyor belt may be a V-shaped conveyor belt. However, other types of conveyor belts are also possible.

According to the first aspect of the present invention, the sausage feeding conveyor belt may be substantially parallel to the first conveyor belt.

According to the first aspect of the present invention, the sausage feeding conveyor belt may comprise two or more sections that operate in a coordinated manner.

According to a second aspect of the present invention, it is also disclosed a system for forming and transferring batches of sausages, the system comprising: an automatic machine for transferring sausages to a conveyor belt according the first aspect of the present invention; a second conveyor belt arranged substantially contiguous to the first conveyor belt and being configured to receive the plurality of sausages from the first conveyor belt and to advance the plurality of sausages in a second advance direction at a second advance speed; a third conveyor belt arranged above the second conveyor belt and advancing in a third advance direction at a third advance speed, said third advance direction being parallel to the second advance direction, said third conveyor belt comprising a plurality of spaced apart paddles configured for creating batches of sausages from the plurality of sausages arranged on the second conveyor belt; said second conveyor belt being a retractable conveyor belt and being configured to retract towards a retracting direction being opposite to the second advance direction; and wherein the spaced apart paddles of the third conveyor belt are configured to act as a stop of the batches of sausages in the retracting direction while the second conveyor belt retracts, so that the batches of sausages fall into an inferior level.

The system according to the second aspect of the present invention allows to create batches of sausages that, for example, can subsequently be collected or packaged, from a stream of sausages coming from the sausage feeding conveyor belt, in a relatively simple and efficient manner.

According to the second aspect of the present invention, the automatic machine may further comprise an automatic packaging unit arranged for collecting and packaging the batches of sausages at the inferior level.

Preferably, the packaging unit is configured to place a plurality of trays in an aligned configuration underneath the second conveyor belt; said second conveyor belt and said third conveyor belt being configured so that a corresponding plurality of batches of sausages is arranged above the corresponding tray aligned with it, so that when the second conveyor belt retracts each batch of sausages falls into the corresponding tray.

According to the second aspect of the present invention, the automatic machine for transferring sausages to a conveyor belt may further comprise a transfer unit for transferring the sausages from the first conveyor belt to the second conveyor belt. Preferably, the transfer unit comprises a transfer element arranged substantially contiguous to the first and to the second conveyor belt.

According to the second aspect of the present invention, the transfer unit may further comprise a rotating shaft comprising a plurality of spaced apart paddles, said rotating shaft being arranged substantially perpendicular to the first and second conveyor belt.

According to the second aspect of the present invention, the paddles of the third conveyor belt may be arranged perpendicular to it and to the third advance direction.

According to the second aspect present invention, the first advance direction and the second advance direction may be equal.

According to the second aspect of the present invention, the second advance direction and the third advance direction may be equal.

According to the present invention, the system for forming and transferring batches of sausages may further comprise a transfer unit for transferring the sausages from the first conveyor belt to the second conveyor belt. Preferably, the transfer unit comprises a transfer element arranged substantially contiguous to the first and to the second conveyor belt. Preferably, the transfer unit further comprises a rotating shaft comprising a plurality of spaced apart paddles, said rotating shaft arranged substantially perpendicular to the first and second conveyor belt.

According to a third aspect of the present invention, it is disclosed a method for forming and transferring batches of sausages comprising the steps of:

- providing a system for forming and transferring batches of sausages according to the second aspect of the present invention;

- placing a plurality of sausages in parallel arrangement, adjacent to each other on a first conveyor belt;

- advancing the plurality of sausages in a first advance direction at a first advance speed with the first conveyor belt;

- receiving in a second conveyor belt the sausages of the first conveyor belt keeping their parallel arrangement;

- advancing the plurality of sausages on the second conveyor belt in a second advance direction at a second advance speed;

- creating batches of sausages from the plurality of sausages on the second conveyor belt with spaced apart paddles of a third conveyor belt arranged above the second conveyor belt advancing in a third advance direction at a third advance speed;

- retracting the second conveyor belt towards a retracting direction, said retracting direction being opposite to the second advance direction; and

- letting the batches of sausages fall into an inferior level.

According to the third aspect of the present invention, the method may further comprise the step of collecting the batches of sausages from the inferior level.

According to the third aspect of the present invention, the method may further comprise the steps of: stopping the advance movement of the first, second and third conveyors belts before the second conveyor belt is retracted; returning the retracted second conveyor belt to its extended position; and resuming the advance movement of the first, second and third conveyor belts.

According to the third aspect of the present invention, the step of placing a plurality of sausages on a first conveyor belt may comprise the steps of: providing a sausage to a sausage feeding conveyor belt; driving the sausage to a sausage discharge unit by the sausage feeding conveyor belt; synchronizing the advance speed of a carriage supporting the discharge unit with the first advance speed of the first conveyor belt; and discharging the sausage in a substantially contiguous manner to a preceding sausage.

According to the third aspect of the present invention, the first conveyor belt may comprise a plurality of contiguous individual compartments, and the step of placing a plurality of sausages on the first conveyor belt may comprise the steps of: synchronizing the carriage of the sausage loading unit with the advance movement of the individual compartment on which a sausage is to be placed; and placing the sausage in the corresponding individual compartment so that consecutive sausages are in contiguous individual compartments. This step is preferably repeated for each sausage to be placed on the first conveyor belt.

According to the third aspect of the present invention, the method may further comprise the step of returning the carriage to its initial position while the first conveyor belt is stopped.

According to the third aspect of the present invention, the method may further comprise the steps of: providing, by an automatic packaging unit, a plurality of trays in an aligned configuration underneath the second conveyor belt; arranging each batch of sausages above the corresponding tray; and letting each batch of sausages fall into the corresponding tray.

Preferably, the method further comprises the step of closing the trays having a plurality of sausages to form packages of a plurality of sausages.

According to the third aspect of the present invention, the method may further comprise the step of aligning the sausages in parallel arrangement, adjacent to each other on the first conveyor belt, with an aligning unit.

The advance direction of a conveyor belt should be understood as the line or course on which the surface of said conveyor belt is in contact, or intended to be in contact, with the sausages is moving or is aimed to move.

It will be understood that references to geometric position, such as parallel, perpendicular, tangent, etc. allow deviations up to $\pm$ 5° from the theoretical position defined by this nomenclature.

It will also be understood that any range of values given may not be optimal in extreme values and may require adaptations of the invention to these extreme values are applicable, such adaptations being within reach of a skilled person.

Brief description of the Figures

The foregoing and other advantages and features will be more fully understood from the following detailed description of an embodiment with reference to the accompanying drawings, to be taken in an illustrative and non-limitative manner, in which:

> FIG. 1 shows a perspective view of a first exemplary embodiment of an automatic machine for transferring sausages to a conveyor belt according to the present invention.

> FIG. 2 shows a perspective view of a sausage discharge unit, with its protective cover, of the first exemplary embodiment of an automatic machine shown in FIG. 1.

> FIG. 3 shows a detail perspective view of the sausage discharge unit shown in FIG. 2 with its protective cover removed.

> FIG. 4 shows a back perspective view of part of the sausage discharge unit shown in FIGS. 2 and 3.

> FIG. 5 shows a perspective sectioned view of the sausage discharge unit shown in FIGS. 2 to 4.

> FIG. 6 shows a detail view of the section view of FIG. 5.

> FIG. 7 shows a perspective view of a first exemplary embodiment of a system for forming and transferring batches of sausages according to the present invention.

Detailed Description of the Invention and of particular embodiments

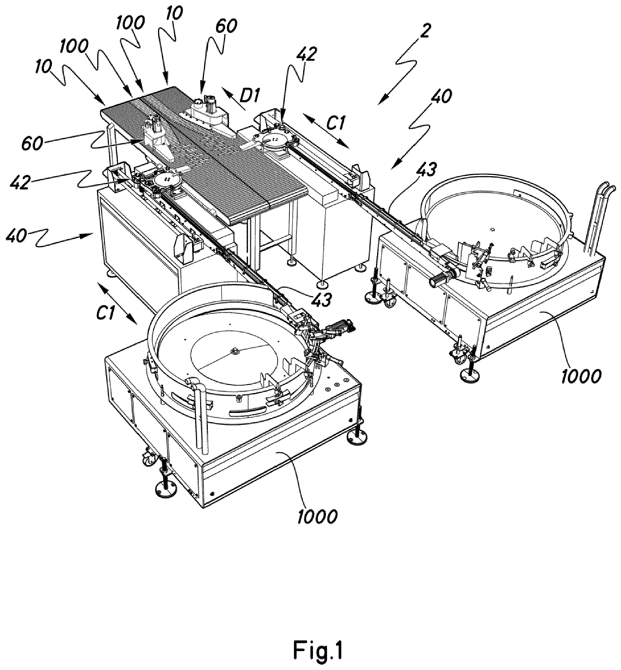

In FIG. 1 can be seen a perspective view of a first exemplary embodiment of an automatic machine 2 for transferring sausages to a conveyor belt according to the present invention.

The depicted automatic machine 2 comprises two production lines, although in other embodiments the automatic machine 2 can comprise, for example, a single production line. In the present case, the elements of the machine are doubled, one for each production line. Unless otherwise explicitly provided, the following description is applicable to embodiments having a single or two production lines. Other embodiments of an automatic machine 2 according to the present invention can comprise more than two production lines.

The automatic machine 2 of the depicted exemplary embodiment comprises two first conveyor belts 10 arranged adjacent to each other, one for each production line. Said conveyor belts 10 are configured to advance a plurality of sausages 100 in parallel arrangement, adjacent to each other, in a first advance direction D1 at a first advance speed.

The automatic machine 2 of this first exemplary embodiment also comprises a sausage loading unit 40, for each production line, for loading sausages 100 to the corresponding first conveyor belt 10. Although for illustrative purposes in FIG. 1 the sausage loading units 40 have been depicted without a protective cover, it is envisaged that the sausage loading units are preferably covered by a protective cover in order to greatly reduce the risk of entrapment, among other benefits.

This first exemplary embodiment will be described following the flow of the sausages 100 along the different stations or elements of the automatic machine 2 for transferring sausages to a conveyor belt.

The automatic machine 2 of this first exemplary embodiment comprises two sausage feeders 1000, one for each production line of the machine 1. Said sausage feeders 1000 are optional and may not be present in other embodiments of an automatic machine 2 according to the present invention. In this particular embodiment, the sausage feeders 1000 are of the centrifugal type. However, in other embodiments having sausage feeders 1000, these can be of a different type.

The sausage loading unit 40 comprises a carriage 41 two-way movable along an advance direction C1, which is parallel to the first conveyor belt 10, said carriage 41 supporting a sausage discharge unit 42 for placing sausages 100 on the first conveyor belt 10 coming from a sausage feeding conveyor belt 43. In particular, said sausage discharge unit 42 is configured to place sausages 100 on the first conveyor belt 10 in a parallel arrangement, adjacent to each other. Among other benefits, this eases the subsequent manipulation of the plurality of sausages 100 and increases the density of sausages 100 on the first conveyor belt 10, thus increasing the productivity of the automatic machine 2 object of the present invention.

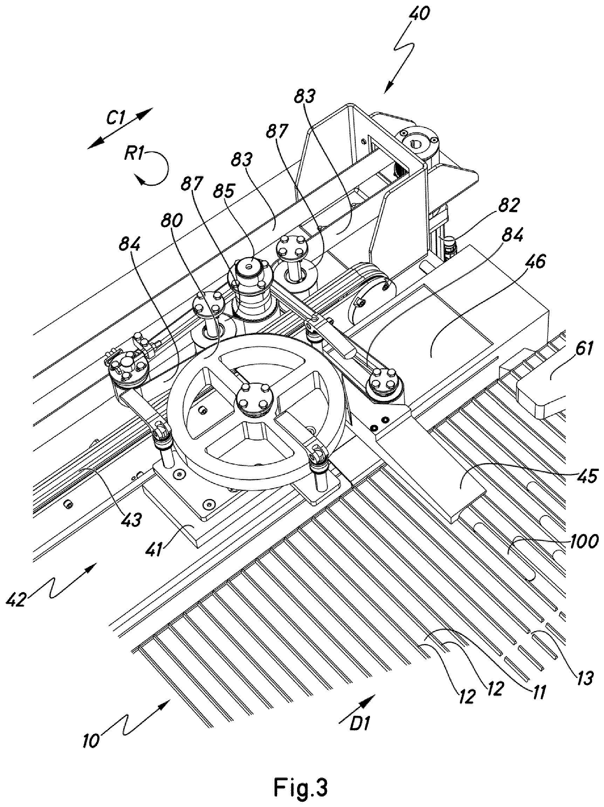

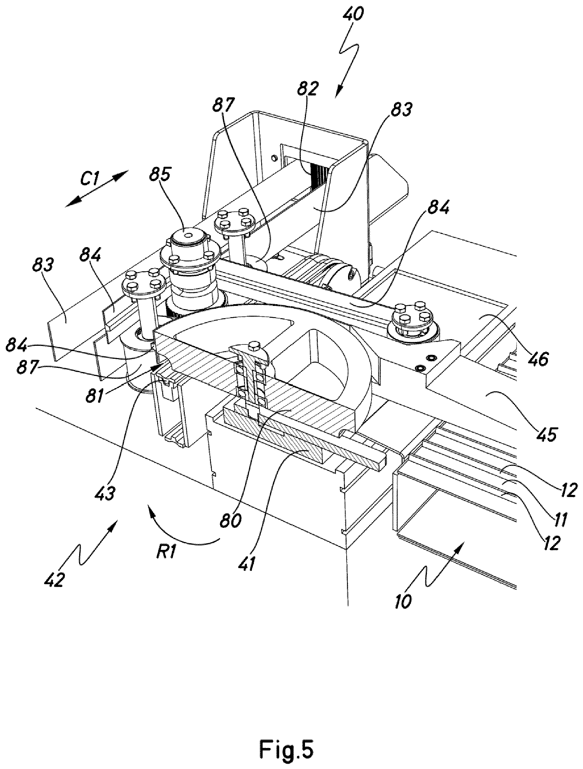

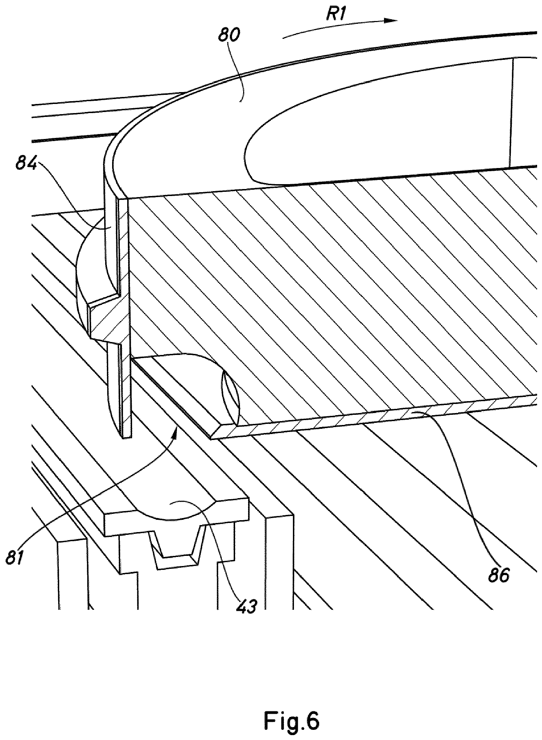

The sausage discharge unit 42 comprises a rotating disc 80 (see, for example, FIG. 3) at least partially surrounded by a guiding element. Said rotating disc 80 and the guiding element together define a guiding channel 81 (see, for example, FIG. 5 or 6) of a predetermined width for driving the sausages 100 from the sausage feeding conveyor belt 43 to the first conveyor belt 10. Said rotating disc 80 is driven by a motor 82 (see, for example, FIG. 3) that is arranged at a fixed position relative to the frame of the automatic machine 2, that is to say, the motor 82 does not move together with the sausage discharge unit 42. Compared with sausages discharge units known in the art wherein the driving motor moves together with the associated sausage discharge unit, the present invention reduces the mass in motion of the sausage discharge unit 42. The claimed arrangement also provides for a sausage discharge unit 42 with a better centre of mass, i.e. a centre of mass closer to the carriage 41 that moves the sausage discharge unit 42. The reduced mass and improved centre of mass lead to better dynamics of the sausage discharge unit 42, which entails a smoother operation of the sausage discharge unit 42, thereby providing an increased lifespan of its parts as the stresses they have to withstand, for example, due to vibrations, are reduced. In should be reminded that, while in operation, the carriage 41 and the sausage discharge unit 42 are substantially in continuous movement, thus an improvement in the dynamics of the sausage discharge unit 42 greatly improves the functioning of the sausage loading unit 40 and of the automatic machine 2 for transferring sausages to a conveyor belt.

The carriage 41 and the sausage discharge unit 42 move along the advance direction C1, back and forth, so that sausages 100 are placed on the conveyor belt 10 in a parallel arrangement adjacent to each other irrespective of the frequency to which the sausages 100 arrive at the sausage discharge unit 42 by the sausage feeding conveyor belt 43.

The sausage feeding conveyor belt 43 can comprise a single section, or two or more sections that operate synchronously acting as a single conveyor belt.

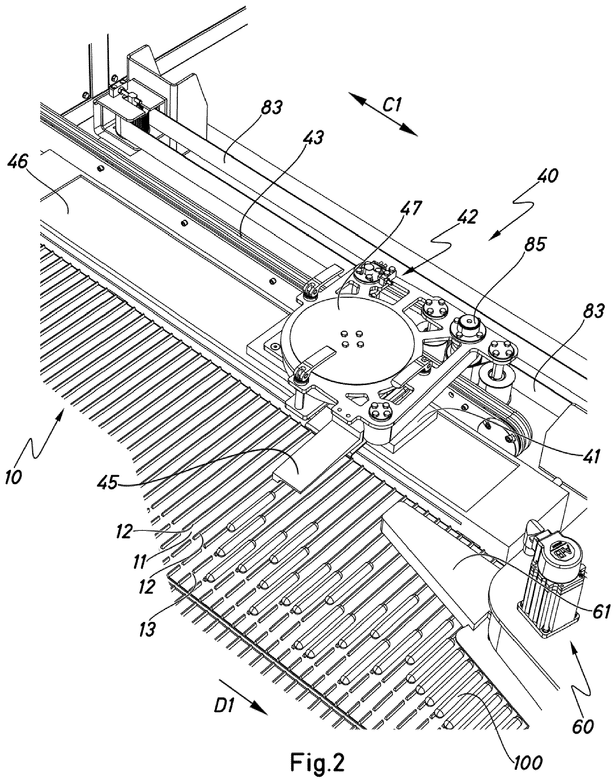

The first conveyor belt 10 of this exemplary embodiment comprises a plurality of individual compartments 11 adjacent to each other (see, for example, FIGS. 2 and 3). Said individual compartments 11 are preferably perpendicular to the first advance direction D1. Other embodiments of an automatic machine 2 according to the present invention can comprise a smooth or flat first conveyor belt 10, that is to say, a first conveyor belt 10 without said individual compartments 11. Having individual compartments 11 is advantageous, at least, because it restricts the movement of the sausages 100 in the longitudinal direction of the first conveyor belt 10. In this exemplary embodiment the individual compartments 11 are defined by walls 12 perpendicular to the surface of the first conveyor belt 10, although in other embodiments having individual compartments 11, such compartments 11 may have a different configuration.

The first conveyor belt 10 advances in the first advance direction D1 thereby moving the sausages 100 laying thereon also in the first advance direction D1. In this first exemplary embodiment, the automatic machine 2 further comprises, for each production line, an aligning unit 60 configured to align the sausages 100 on the first conveyor belt 10 so that the ends of the sausages 100 are aligned. The aligning unit 60 maintains the sausages 100 on the first conveyor belt 10 in a parallel arrangement adjacent to each other, as they were placed on the first conveyor belt 10 by the sausage discharge unit 42 of the sausage loading unit 40. Each of the aligning units 60 shown comprise an oscillating inclined plane 61 arranged in a convergent manner following the first advance direction D1. Said aligning units 60 are optional and other embodiments of the automatic machine 2 of the present invention may lack them.

FIG. 2 shows a perspective view of the sausage discharge unit 42, with its protective cover 47, of the first exemplary embodiment of an automatic machine 2 shown in FIG. 1. The protective cover 47 is removable and allows for easy maintenance operations but avoiding risk of entrapment with the rotating disc 80 (see, for example, FIG. 3) or any other moving part of the sausage discharge unit 42.

FIG. 2 shows in greater detail the advance direction C1 of the carriage 41 and its corresponding sausage discharge unit 42. As depicted by arrows C1, the carriage 41 moves two-ways along the first conveyor belt 10. Said movement is preferably rectilinear and parallel to the first conveyor belt 10, although in other embodiments said movement could also be slightly curvilinear or rectilinear but slightly convergent / divergent, as long as the distance of the carriage 41 to the first conveyor belt 10, and in particular, the distance from the sausage discharge unit 42 supported by the carriage 41 to the first conveyor belt 10 allows correct operation of the sausage discharge unit 42, that is to say, allows correct placement of the sausages 100 on the first conveyor belt 10.

By two-way moving the carriage 41 along the first conveyor belt 10, the discharge unit 42 synchronizes its position with the one of the individual compartment 11 that is going to be loaded with the corresponding sausage 100. As sausages 100 are not received from the sausage feeding conveyor belt 43 at a constant rate, the carriage 41 moves so that the sausage 100 to be loaded on the first conveyor belt 10 is loaded in the compartment 11 adjacent to the one previously loaded. If the interval between subsequent sausages 100 is too long, the carriage, and thus, the discharge unit 42 will move towards the distal or unloading end of the first conveyor belt 10 to reach the first empty individual compartment 11 and follow said individual compartment 11, at the first advance speed of the first conveyor belt 10, until the sausage 100 is loaded onto the corresponding individual compartment 11. If the interval between subsequent sausages 100 is too short, the carriage 41 together with the sausage discharge unit 42 will move towards the proximal or loading end of the first conveyor belt 10 to reach the first empty individual compartment 11, so that a sausage can be delivered thereon. Once a sausage 100 is loading in the corresponding individual compartment 11, the carriage 41 and the discharge unit 42 preferably synchronize its position with the next empty individual compartment 11 so that the sausages 100 are placed on the first conveyor belt 11 in a parallel arrangement, adjacent to each other.

In the exemplary embodiment shown, the carriage 41 and, consequently, the sausage discharge unit 42 moves along the first conveyor belt 10 following the advance direction C1 guided by its guide 46.

The aforementioned description of the operation of the sausage loading unit 40 has been made in the context of an automatic machine 2 comprising a first conveyor belt 10 having a plurality of individual compartments 11. However, it should be noted that the operation is equivalent in other embodiments wherein the first conveyor belt 10 is smooth, that is to say, in other embodiment wherein the first conveyor belt 10 does not comprise individual compartments 11. In this latter case, the carriage 41 and the discharge unit 42 move to the position adjacent to the previously dispensed sausage 100, so that the sausages 100 are loaded on the first conveyor belt 10 in a parallel arrangement, adjacent to each other.

The sausage discharge unit 42 of this exemplary embodiment comprises a sausage guide 45 that guides the sausage 100 to the corresponding location on the first conveyor belt 10. Said sausage guide 45 is optional and ensures optimal placement of the sausage 100 on the conveyor belt, although the sausage discharge unit 42 would still be able to operate without it.

As can be seen in greater detail in, for example, FIG. 5 or 6, the sausage feeding conveyor belt 43 comprises a substantially semicircular recess with a shape substantially complementary to the one of the sausages 100 to be transferred. This aids in preventing the sausage from falling of the sausage feeding conveyor belt 43 and provides a better and softer handling of the sausage 100. In other embodiments, the sausage feeding conveyor belt 43 can have a different configuration. For example, can be a V-shaped conveyor belt.

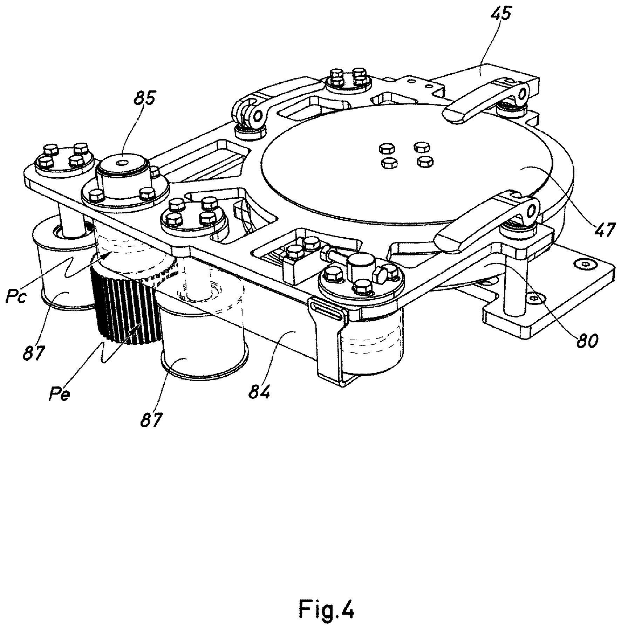

FIG. 3 shows a detail perspective view of the sausage discharge unit previously shown in FIG. 2, but with its protective cover 47, and its auxiliar supporting structure, removed, so that elements hidden in FIG. 2 by such elements can be seen. In particular, FIG. 3 allows to see in great detail the rotating disc 80, as well as the electric motor 82, the first belt 83 and the second belt 84 that drive said rotating disc 80. In particular, in this exemplary embodiment the motor 82 drives the first belt 83, which is arranged substantially parallel to the first conveyor belt 10 and to the guide 46 of the carriage 41. Said first belt 83 drives a first shaft 85 that transfers the movement received from the first belt 83 to a second belt 84. Adjacent to the first shaft 85, the sausage loading unit 40 comprises two tension rollers 87 (see FIG. 4 for greater detail) for tensioning the first belt 83. However, other embodiments may lack such tension rollers 87 or may have them in a different arrangement.

As previously stated, in this exemplary embodiment the first shaft 85 transfers the movement of the first belt 83 to the second belt 84 that drives the rotating disc 80. In order to do so, in this exemplary embodiment the second belt 84 partially overlaps its path with the rotating disc 80 so that the second belt 84 drags the rotating disc 80 by friction between a lateral surface of the rotating disc 80 and the second belt 84.

In this exemplary embodiment, the rotating disc 80 rotates in a clockwise direction, as depicted by arrow R1 that illustrates the rotation direction of the rotating disc 80.

In FIG. 3 can be seen the sausage discharge unit 42 transferring sausages to the first conveyor belt 10, in particular, to the corresponding individual compartment 11 of the first conveyor belt 10.

FIG. 4 shows a back perspective view of part of the sausage discharge unit 42 shown in FIGS. 2 and 3. In particular, FIG. 4 shows the rotating disc 80, the removable cover 47 of the rotating disc 80, the sausage guide 45, the second belt 84, the tensioning rollers 87 of the first belt 83 (not shown) and the first shaft 85. As can be seen, in this exemplary embodiment, the first shaft 85 comprises a first pulley Pe and a second pulley Pc. The first pulley Pe is driven by the first belt 83 (see, for example, FIG. 3) and the second pulley Pc drives the second belt 84, the first pulley Pe and the second pulley Pc moving together by the first shaft 85.

In the exemplary embodiment shown, the first pulley Pe is a toothed pulley and, consequently, the first belt 83 is a toothed belt, whereas the second pulley Pc is a grooved pulley and the second belt 84 comprises a protrusion with a shape complementary to the groove of the second pulley Pc. However, in other embodiments said first and second pulleys Pe, Pc and said first and second belts 83, 84 can be of a different type.

In the exemplary embodiment shown, as the rotating disc 80 is driven by the fixed electric motor 82 via the first and second belts 83, 84 and as the sausage discharge unit 42 moves along the advance direction C1 in order to synchronize its position with the first belt 10, as explained hereinabove, the rotational speed of the rotating disc 80 varies slightly when the carriage 41, and thereby, the sausage discharge unit 42, move following the advance direction C1. Although the automatic machine 2 can operate with a slightly variable rotational speed of the rotating disc 80, it is preferred that the rotational speed of the rotating disc 80 remains constant. In order to do so, in the exemplary embodiment shown, the automatic machine 2 comprises a control unit which is configured to maintain a constant rotational speed of the rotating disc 80 by adjusting the rotational speed of the electric motor 82 so that the rotational speed of the rotating disc 80 remains constant.

In particular, the rotational speed of the electric motor 82 is corrected following the equation:

$$V_{sb} = V_{sfb} + \frac{\phi_{Pc}}{\phi_{Pe}} x\, V_{du}$$

Wherein $V_{sb}$ refers to lineal speed of the second belt 84, $V_{sfb}$ refers to lineal speed of sausage feeding conveyor belt 43, $\phi_{pe}$ refers to the diameter of the first pulley Pe, $\phi_{pc}$ refers to the diameter of the second pulley Pc and $V_{du}$ refers to the lineal speed of the sausage discharge unit 42.

In other embodiments having different powertrains, the aforementioned adjusting equation may be different.

When the carriage 41 and the sausage discharge unit 42 do not move following the advance direction C1, i.e. are stationary, the rotational speed of the rotating disc 80 is the one determined by the gear ratio of the powertrain defined by the electric motor 82, the first band 83, the second band 84 and the first shaft 85.

Underneath the rotating disc 80, in this exemplary embodiment, the sausage discharge unit 42 comprises a base plate 86 for supporting the sausages 100 from underneath and preventing them from falling down. In other embodiments, such support for the sausages 100 may be different and could be even provided by the rotating disc 80, for example, by a C shaped groove.

FIGS. 5 and 6 show a perspective sectioned view of the sausage discharge unit shown in FIGS. 2 to 4, that allow to see details that otherwise are hidden. In particular, said section views allow to see the guiding channel 81, which is configured to guide the sausages 100 from the sausage feeding conveyor belt 43 to the first conveyor belt 10. In this exemplary embodiment, the inner surface of the second belt 84, i.e. the surface of the second belt 84 in contact with the lateral surface of the rotating disc 80, acts as a guiding element that together with the rotating disc 80, and in particular, with a perimetral recess of the rotating disc 80, define the guiding channel 81. The shape, and in particular, the width, of the guiding channel 81 depends on the calibre or diameter of the sausages 100. When the automatic machine 2 is to be used with sausages 100 of a different calibre or diameter, the rotating disc 80 can be replaced with another disc 80 having a recess of a different depth, thereby modifying the width of the guiding channel 81.

Although in this exemplary embodiment the guiding channel 81 is defined by the rotating disc 80 and the second belt 84, in other embodiments said guiding channel 81 may be defined differently. For example, by a groove of the rotating disc.

In other embodiments of the present invention, other mechanical configurations that drive the rotating disc 80 of the sausage discharge unit 42 with the electric motor 82 being at a fixed location relative to the frame of the automatic machine 2 are also possible.

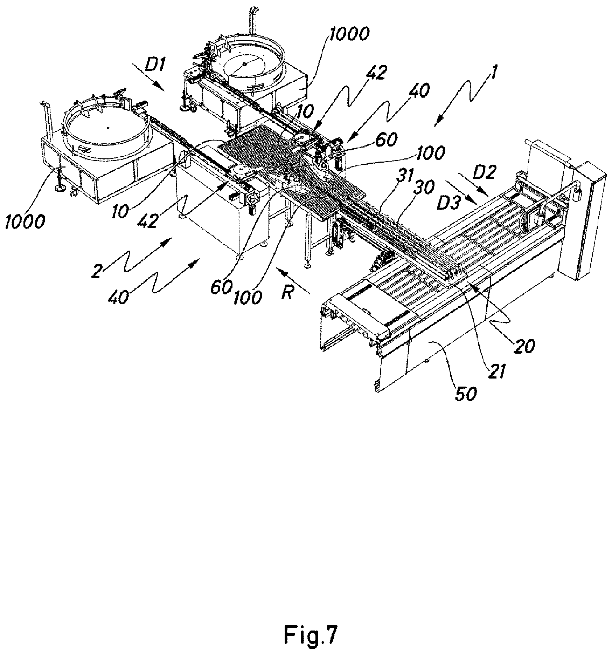

FIG. 7 shows a perspective view of a first exemplary embodiment of a system 1 for forming and transferring batches of sausages according to the present invention. The system 1 of this first exemplary embodiment comprises an automatic machine 2 for transferring sausages according to the present invention, for example, the first exemplary embodiment shown in FIGS. 1 to 6 and further comprises a second conveyor belt 20 and a third conveyor belt 30. The second conveyor belt 20 is arranged substantially contiguous and at an end of the first conveyor belt 10 and is configured to receive the plurality of sausages 100 from the first conveyor belt 10 and to advance the plurality of sausages 100 in a second advance direction D2 at a second advance speed. Said second conveyor belt 20 is a retractable conveyor belt and is configured to retract towards a retracting direction R opposite to the second advance direction D2. The third conveyor belt 30 is arranged above the second conveyor belt 20 and advances in a third advance direction D3 at a third advance speed, said third advance direction D3 being parallel to the second advance direction D2.

Once the sausages 100 on the first conveyor belt 10 reach an unloading end thereof, the sausages 100 are transferred to the second conveyor belt 20 which is configured to receive the plurality of sausages 100 from the first conveyor belt 10 and to advance the plurality of sausages 100 in a second advance direction D2 and at a second advance speed. As the plurality of sausages 100 are transferred to the second conveyor belt 20, said plurality of sausages 100 are separated into batches of sausages 100 by paddles 31 of the third conveyor belt 30. Said batches of sausages 100 advance along the second conveyor belt 20 together with the third conveyor belt 30, and, in particular, together with the paddles 31 of the conveyor belt that delimits the corresponding batch. By advancing synchronously, the batches of sausages 100 are protected as otherwise the batches would rub against the paddles 31 and drag them, thereby damaging, or at least risking to damage, the sausages 100.

Once the batches of sausages 100 reach a discharging position, the second conveyor belt 20, which is a retractable conveyor belt, retracts towards a retracting direction R that is opposite to the second advance direction, so that batches of sausages 100 on the second conveyor belt 20 fall into an inferior level, wherein they are preferably collected.

This first exemplary embodiment of a system 1 according to the present invention comprises two production lines and each production line has its own independent elements, with the exception of the second conveyor belt 20 which is shared for both production lines. The system 1 of this exemplary embodiment comprises two third conveyor belts 30 for each product line, which means that in total, the exemplary embodiment shown comprises four third conveyor belts 30 that work in cooperation as two pairs of conveyor belts 30, one for each product line.

The third conveyor belt 30 can comprise means for locking its position, so that the paddles 31 act as a stop of the corresponding batch 110 of sausages 100. The position of the third conveyor belt 30 can be locked either by its driving motors or by a lock, either mechanical or magnetic.

The system 1 object of the present invention can comprise a transfer unit (not shown) that is configured to aid in the transfer of sausages 100 from the second conveyor belt 20 to the third conveyor belt 30. The transfer unit can comprise a transfer element arranged substantially contiguous to the first and to the second conveyor belt 10, 20 and a rotating shaft comprising a plurality of spaced apart paddles that aid in transferring the sausages 100 from the first conveyor belt 10 to the second conveyor belt 20. Said paddles are preferably uniformly distributed around the circumference of the rotating shaft.

In order to ensure a smoother transition between the first conveyor belt 10 and the second conveyor belt 20 the transfer element of the transfer unit can comprise extensions that extend towards the first conveyor belt 10. In order to avoid mechanical interference, i.e. collision, between the extensions and the walls 12 defining the individual compartments 11, said walls comprise cutouts 13 aligned with said extensions, so that the extensions can pass through the cutouts 13 and be closer to the first conveyor belt 10.

In embodiments wherein the first conveyor belt 10 lacks individual compartments 11, and in particular, lacks walls 12 that define individual compartments 11, said extensions may not be necessary as the transfer element can be placed closer to the surface of the first conveyor belt 10 carrying the sausages 100. However, said extensions can also be used in this kind of embodiments.

Besides aiding in transferring the sausages 100 from the first conveyor belt 10 to the second conveyor belt 20, the transfer unit acting in cooperation with the paddles 31 of the third conveyor belt 30 also aid in creating the batches of sausages 100 on the second conveyor belt 20. The paddles 31 of the third conveyor belt 30, or in this exemplary embodiment, the paddles 31 of the third conveyor belts 30, are spaced apart a distance such that a batch of a certain number of sausages 100 is created between consecutive paddles 31. The number of sausages 100 in a batch depends on the distance between paddles. Therefore, the third conveyor belt 30, together with its paddles 31, is preferably replaceable so that batches 110 with a different number of sausages 100 can be created by simply replacing the third conveyor belt 30 with another one wherein the distance between paddles 31 is different. Alternatively, it is also envisaged a third conveyor belt 30 having removable paddles 31 so that they can be removed from the third conveyor belt 30 at reattached to it separated by a different distance, so that the number of sausages 100 in a batch 110 differs from the previous configuration.

The transfer unit is an optional element and may not be present in other embodiments of the present invention. In case is present, it can have various configurations.

The first exemplary embodiment of a system 1 according to the present invention shown in FIG. 7 comprises an optional automatic packaging unit 50 configured to pack the batches of sausages 100 coming from the second conveyor belt 20. In the exemplary embodiment shown, the packaging unit 50 is a thermoforming machine that package the batches of sausages 100 in trays. However, in other embodiments having a packaging unit 50, said packaging unit may package the batches of sausages 100 in packages other than trays and may be any other suitable packing machine other than a thermoforming packaging machine.

When the second conveyor belt 20 is fully loaded with batches of sausages 100 along its entire length, said batches of sausages 100 are ready to be dropped to an inferior level, in this case, to the trays of the packaging unit 50. As the second conveyor belt 20 cannot accommodate more batches 110, the first conveyor belt 10 stops its operation. When the operation of the first conveyor belt 10, the carriage 41 preferably returns the sausage discharge unit 42 to its initial or resting position, as, depending on the interval between sausages 100 coming from the sausage feeding conveyor belt 43 and on the advance speed of the first conveyor belt 10, the carriage 41 may be closer to the unloading or to the loading end of said first conveyor belt 10. While the carriage 41 and the sausage discharge unit 42 return to its initial position, the sausage discharge unit 42 continues placing sausages 100 on the first conveyor belt 10. However, it is also possible that the sausage discharge unit 42 stops placing sausages 100 on the first conveyor belt 10 until the batches of sausages 100 are unloaded from the second conveyor belt 20 and operation of the first and second conveyor belts 10, 20 is resumed.

Before beginning the unloading of the batches of sausages 100, the third conveyor belt 30 locks its position, so that the paddles 31 can act as a stop of the sausages 100 of the batches.

As the belt 21, of the second conveyor belt 20, retracts, the paddles 31 of the third conveyor belt 30 act as a stop of the batches of sausages 100, which fall into an inferior level wherein, in this exemplary embodiment, the trays are located. The packaging unit 50, of this exemplary embodiment, places the trays aligned in rows so that each tray is placed directly underneath the corresponding batch of sausages 100, so that when the sausages 100 fall once the belt 21 has been retracted past its location, the sausages 100 fall into the corresponding tray.

Once the trays 51 are loaded with the corresponding sausages 100, after the second conveyor belt 20 has reached its fully retracted position, the packaging unit 50 can move the rows of trays in an advance direction so that the subsequent row of trays is placed underneath the second conveyor belt 20 and the loaded trays proceed with its packaging. Once the row of trays is loaded with the corresponding sausages 100, the system 1 is ready to resume its operation. In order to do so, the first conveyor belt 10 and the sausage loading unit 40 resume its operation thereby providing sausages 100 to the second conveyor belt 20 that advances to its extended position while batches of sausages are being created on it by the paddles 31 of the third conveyor belt 30.

The operation of the system 1 and, in particular, of the second and third conveyor belts 20, 30 has been described in cooperation with a packaging unit 50. However, it should be understood that the operation would be equivalent in embodiments lacking a packaging unit 50, wherein the batches of sausages 100 fall into an inferior level, wherein they are preferably collected. Said inferior level may be a further conveyor belt, a support surface, a cooking appliance, etc.

It should be understood that the first, second and third conveyor belts 10, 20, 30 are driven by corresponding properly controlled motors, even though they are not depicted in the drawings.

Unless otherwise provided, features described in relation to a certain exemplary embodiment are also applicable to other embodiments of the present invention.

## Claims

1. Automatic machine (2) for transferring sausages to a conveyor belt, the machine comprising a frame supporting:

   a first conveyor belt (10) for advancing a plurality of sausages (100) in parallel arrangement, adjacent to each other, in a first advance direction (D1) at a first advance speed;
   a sausage feeding conveyor belt (43) for feeding sausages (100) to a sausage discharge unit (42);
   the sausage discharge unit (42) being configured to transfer sausages (100) from the sausage feeding conveyor belt (43) to the first conveyor belt (10); said sausage discharge unit (42) being supported by a carriage (41) movable along the first conveyor belt (10) and configured to synchronize with the advance speed of the first conveyor belt (10) so that the sausages (100) are placed on the first conveyor belt (10) in a substantially contiguous manner in parallel arrangement, adjacent to each other;
   the sausage discharge unit (42) comprising a rotating disc (80) at least partially surrounded by a guiding element, the rotating disc together (80) with the guiding element defining a guiding channel (81) of a predetermined width for driving the sausages (100) from the sausage feeding conveyor belt (43) to the first conveyor belt (10); said rotating disc (80) being driven by a driving unit comprising an electric motor (82); **characterized in that** said electric motor is arranged at a fixed position relative to the frame of the automatic machine (2).

2. Automatic machine (2), according to claim 1, wherein the electric motor (82) is operatively connected to the rotating disc (80) by a first belt (83).

3. Automatic machine (2), according to claim 2, wherein the first belt (83) is arranged substantially parallel to the first conveyor belt (10).

4. Automatic machine (2), according to claim 2 or 3, wherein the first belt (83) drives a first shaft (85) that drives a second belt (84) configured to drive the rotating disc (80).

5. Automatic machine (2), according to claim 4, wherein the electric motor (82) rotates at a certain rotational speed and the automatic machine (2) further comprises a control unit configured to adjust the rotational speed of the electric motor (82) so the rotating disc (80) rotates at a substantially constant rotational speed.

6. Automatic machine (2), according to claim 4 or 5, wherein the second belt (84) is configured to act as the guiding element.

7. Automatic machine (2), according to any one of claims 1 to 5, wherein the sausage discharge unit (42) comprises a curved wall configured to act as the guiding element.

8. Automatic machine (2), according to any one of the preceding claims, wherein the first conveyor (10) belt comprises a plurality of contiguous individual compartments (11), each individual compartment (11) being configured to receive a corresponding sausage (100); and wherein the carriage (41) is configured to move the sausage discharge unit (42) along the first conveyor belt (10) so that consecutive sausages (100) are placed in contiguous individual compartments (11).

9. Automatic machine (2), according to any one of the preceding claims, wherein the sausage discharge unit (42) comprises a removable protective cover (47) of the rotating disc (80).

**10.** Automatic machine (2), according to any one of the preceding claims, wherein the sausage discharge unit (42) comprises a sausage guide (45) for guiding sausages to the first conveyor belt (10).

**11.** Automatic machine (2), according to any one of the preceding claims, further comprising an aligning unit (60) for aligning the plurality of sausages in parallel arrangement, on the first conveyor belt (10), the aligning unit comprising an oscillating inclined plane (61) arranged in a convergent manner.

**12.** System (1) for forming and transferring batches of sausages, the system comprising:

- an automatic machine (2) for transferring sausages to a conveyor belt according to any one of claims 1 to 11;
- a second conveyor belt (20) arranged substantially contiguous to the first conveyor belt (10) and being configured to receive the plurality of sausages (100) from the first conveyor belt (10) and to advance the plurality of sausages (100) in a second advance direction (D2) at a second advance speed;
- a third conveyor belt (30) arranged above the second conveyor belt (20) and advancing in a third advance direction (D3) at a third advance speed, said third advance direction (D3) being parallel to the second advance direction (D2), said third conveyor belt (30) comprising a plurality of spaced apart paddles (31) configured for creating batches of sausages (100) from the plurality of sausages (100) arranged on the second conveyor belt (20);

said second conveyor belt (20) being a retractable conveyor belt and being configured to retract towards a retracting direction (R) being opposite to the second advance direction (D2); and wherein the spaced apart paddles (31) of the third conveyor belt (30) are configured to act as a stop of the batches of sausages (100) in the retracting direction while the second conveyor belt (20) retracts, so that the batches of sausages (100) fall into an inferior level.

**13.** System (1), according to claim 12, further comprising an automatic packaging unit (50) arranged for collecting and packaging the batches of sausages (100) at the inferior level.

**14.** System (1), according to claim 13, wherein the packaging unit (50) is configured to place a plurality of trays in an aligned configuration underneath the second conveyor belt (20); said second conveyor belt (20) and said third conveyor belt (30) being configured so that a corresponding plurality of batches of sausages (100) is arranged above the corresponding tray aligned with it, so that when the second conveyor belt (20) retracts each batch of sausages (100) falls into the corresponding tray.

**15.** System (1), according to any one of claims 12 to 14, further comprising a transfer unit for transferring the sausages from the first conveyor belt to the second conveyor belt.

Fig.1

Fig.2

Fig.3

14

Fig.4

Fig.5

Fig.6

Fig.7

Europäisches
Patentamt

European
Patent Office

Office européen
des brevets

## EUROPEAN SEARCH REPORT

**Application Number**

EP 24 38 2109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 025 587 A1 (HANDTMANN ALBERT MASCHF [DE]) 1 June 2016 (2016-06-01) * abstract; claims 1-18; figures 1-13d * * paragraphs [0001] - [0069] * | 1-15 | INV. A22C11/00 B65B35/44 |
| A | US 4 344 523 A (MAY KENNETH D ET AL) 17 August 1982 (1982-08-17) * abstract; claims 1-3; figures 1-13L * * column 1, line 6 - column 4, line 28 * | 1-15 | |
| A | WO 2015/028562 A1 (POLY CLIP SYSTEM GMBH & CO KG [DE]) 5 March 2015 (2015-03-05) * abstract; claims 1-15; figures 1-10 * * page 1, line 1 - page 27, line 12 * | 1-15 | |
| A | EP 2 699 500 B1 (MAREL TOWNSEND FURTHER PROC BV [NL]) 12 August 2015 (2015-08-12) * paragraphs [0001] - [0028]; claims 1-15; figures 1-5D * | 1-15 | |
| | | | **TECHNICAL FIELDS SEARCHED (IPC)** B65B A22C |

The present search report has been drawn up for all claims

| Place of search | Date of completion of the search | Examiner |
|---|---|---|
| The Hague | 24 June 2024 | Rojo Galindo, Ángel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 38 2109

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2024

| Patent document cited in search report | | Publication date | Patent family member(s) | | Publication date |
|---|---|---|---|---|---|
| EP 3025587 | A1 | 01-06-2016 | EP | 3025587 A1 | 01-06-2016 |
| | | | US | 2016143300 A1 | 26-05-2016 |
| US 4344523 | A | 17-08-1982 | NONE | | |
| WO 2015028562 | A1 | 05-03-2015 | DE | 112014003903 A5 | 09-06-2016 |
| | | | DE | 202013007680 U1 | 10-09-2013 |
| | | | WO | 2015028562 A1 | 05-03-2015 |
| EP 2699500 | B1 | 12-08-2015 | DK | 2699500 T3 | 23-11-2015 |
| | | | EP | 2699500 A1 | 26-02-2014 |
| | | | NL | 2006649 C2 | 23-10-2012 |
| | | | US | 2014106654 A1 | 17-04-2014 |
| | | | WO | 2012144890 A1 | 26-10-2012 |

EPO FORM P0459

For more details about this annex : see Official Journal of the European Patent Office, No. 12/82

**EP 4 595 758 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9554581 B2

- US 20110124276 A1